# EUROPÄISCHE PATENTSCHRIFT

(11) **EP 0 517 191 B1**
(45) Veröffentlichungstag und Bekanntmachung des Hinweises auf die Patenterteilung: **23.08.1995**
(21) Anmeldenummer: 92109394.4
(22) Anmeldetag: 03.06.1992
(51) Int. Cl.: C23C 4/08

(54) **Verfahren zur Herstellung einer Gleitlageroberflächenschicht aus üblichen Lagermetallen**
Method for the manufacture of sliding surface layers
Procédé pour la réalisation de couches superficielles de glissement

(30) Priorität: 05.06.1991 DE 4118469
(43) Veröffentlichungstag der Anmeldung: 09.12.1992
(73) Patentinhaber: Linde Aktiengesellschaft, 65189 Wiesbaden (DE)
(72) Erfinder: Heinrich, Peter, Dipl.-Ing. (FH), W-8034 Germering (DE); Kreye, Heinrich, Prof. Dr., W-2000 Hamburg 71 (DE)
(74) Vertreter: Schaefer, Gerhard, Dr.

(56) Entgegenhaltungen:
- EP-A- 0 323 185
- DE-A- 2 715 914
- GB-A- 2 130 250
- US-A- 2 187 348
- METALLOBERFLACHE Bd. 43, Nr. 10, Oktober 1989, MUNCHEN,DE Seiten 459 - 466; G.BARBEZAT: 'hochgeschwindigkeits-flammspritzen von schutzschichten'

## Beschreibung

Die Erfindung betrifft ein Verfahren zur Herstellung einer Gleitlageroberflächenschicht aus Lagermetall, z.B. aus einer Kupfer-Zinn-, Kupfer-Blei- oder Blei-Aluminiumlegierung.

Gleitlageroberflächenschichten haben die Aufgabe, die bei Gleitlagern erforderlichen Eigenschaften, wie Belastbarkeit, positives Gleitverhalten, hohe Abriebfestigkeit, chemische Stabilität usw. zu liefern. Derartige Anforderungen erfüllende Gleitlagerschichten sind in Lagern verschiedenster Art, beispielsweise Lagerbuchsen und Lagerschienen, Lagerschalen oder Halbschalen, Gleitschuhen und dergleichen vorhanden bzw.anzubringen. Bislang werden solche Lagermetallschichten z.B. mit der Sintertechnik aufgebracht oder auch mit gießtechnischen Methoden an den entsprechenden Stellen plaziert. Zudem sind Auftragsverfahren für Lagermetallschichten bekannt, die auf der Basis der Kathodenzerstäubung arbeiten (siehe z.B. DE-OS 38 43 927). Schließlich sind auch Wärmebehandlungsmethoden für solche Lagerbauteile und Lagerflächen bekannt, die die gewünschten Eigenschaften produzieren und die beispielsweise im Oberflächenaufnitrieren solcher Bauteile in entsprechenden Gasatmosphären bestehen.

Alle diese Methoden sind jedoch mit erheblichem Aufwand verbunden - so sind im Falle des Sinterns und des Nitrierens energieverschlingende Wärmebehandlungen durchzuführen, während bei der Kathoden- und Gießmethode komplizierte verfahrens- und vorrichtungstechnische Maßnahmen zu bewerkstelligen sind.

Ferner ist aus der DE-OS 27 15 914 ein Herstellungsverfahren für eine Gleitlager-Oberflächenschicht auf einem Grundkörper bekannt, bei dem zunächst eine tragende Unterschicht aus Aluminium oder einer Aluminiumlegierung auf dem Grundkörper aufgebracht wird, diese auf eine Temperatur von über 450°C erhitzt wird und dann das Aufbringen einer Oberschicht aus einer sog. Suspensionslegierung, vorzugsweise einer Al-Pb-Legierung, mittels einer thermischen Spritzmethode erfolgt, wobei abschließend die so erhaltenen Beschichtung durch Anwendung von Druck mechanisch verdichtet wird. Dieses Verfahren führt zu einer vorteilhaften und insbesondere ablösungsstabilen Schicht, wobei die Herstellung jedoch wiederum einen relativ aufwendigen und jedenfalls mehrstufigen Prozeß darstellt.

Daher besteht die Aufgabenstellung vorliegender Erfindung darin, eine Möglichkeit anzugeben, mit der besagte Gleitlageroberflächenschichten auf einfache und ökonomisch günstige Weise in hochwertiger Qualität hergestellt werden können.

Diese Aufgabe wird erfindungsgemäß dadurch gelöst, daß eine solche Schicht aus dem jeweiligen Lagermetall mit dem autogenen Flammspritzverfahren oder dem ebenso autogenen Hochgeschwindigkeits-Flammspritzverfahren hergestellt wird, wobei beim Auftragen eine Spritzpartikelgeschwindigkeit von wenigstens 200 m/sec, vorzugsweise größer 350 m/sec, eingestellt wird.

Diese Flammspritzmethoden, wobei insbesondere mit hohen Spritzpartikelgeschwindigkeiten gearbeitet wird, führen mit ihren verfahrensimpliziten Einstelloptionen zur Möglichkeit, wesentliche Eigenschaften einer Lagermetallschicht in wichtigen Bereichen wunschgemäß und vorteilhaft produzieren zu können. Beispielsweise werden durch die Spritzpartikelgeschwindigkeit die Haftung und Porosität einer erzeugten Schicht im wesentlichen vorgegeben. Des weiteren besteht über die Einstellbarkeit des Brenngas-Sauerstoff-Verhältnisses bei diesen thermischen Spritzmethoden die Möglichkeit, oxidierend oder reduzierend auf das Spritzmaterial einzuwirken und somit auf Eigenschaften der entstehenden Schicht, wie chemische Zusammensetzung, Bearbeitbarkeit, Wärmeleitfähigkeit, Einfluß zu nehmen. Auf diese Weise lassen sich daher Gleitlageroberflächenschichten herstellen, die sehr genau vorab festlegbare Eigenschaften aufweisen und die, darüber hinaus, auch die ansonsten an solche Schichten gestellten Anforderungen in jeder Hinsicht erfüllen. Entsprechende Gleitlageroberflächenschichten sind gemäß der Erfindung mit allen gängigen Lagermetallen herstellbar. Dazu gehören beispielsweise auch verschiedene Cu-Zn-, Al-Sn-Cu-, Pb-Sn-Sb-, Cu-Al-Legierungen.

In Zusammenhang mit dem erfindungsgemäßen Vorschlag ist vor allem darauf hinzuweisen, daß - vor dem Hintergrund der vorbekannten Verfahren - zunächst erst einmal grundsätzlich die Möglichkeit mit in Betracht gezogen werden mußte, thermische Spritzverfahren, wie Flammspritzen, Lichtbogenspritzen und Plasmaspritzen, als Auftragsmethode für Gleitlageroberflächenschichten anzuwenden. Hierbei hat sich der erfindungsgemäße Vorschlag auch in überraschender Weise als besonders geeignet herausgestellt, da speziell von flammgespritzten Schichten eine nur unzureichende Haftung und Festigkeit für den hier in Rede stehenden Zweck erwartet wurde.

Grundsätzlich kann das aufzuspritzende Lagermetallmaterial in Draht- oder Pulverform beim Flammspritzen oder Hochgeschwindigkeitsflammspritzen (HGFS) zur Anwendung kommen, mit Vorteil werden jedoch die entsprechenden Lagermetalle wegen größerer Verfahrensflexibilität - Partikelgeschwindigkeit, Körnung - und auch besserer Produktqualität in Pulverform verarbeitet. Vorteilhaft ist zudem, wenn als Brenngas das energiereiche und höchstvariabel einstellbare Acetylen zur Anwendung kommt. Erfindungsgemäße Schichten weisen dabei eine Porosität von 1 % und darunter, mit Vorzug 0.5-1 % auf.

Anhand eines Lagerelements, nämlich eines Gleitschuhes aus einer Axialkolbenmaschine, soll im folgenden die Erfindung beispielhaft näher erläutert werden.

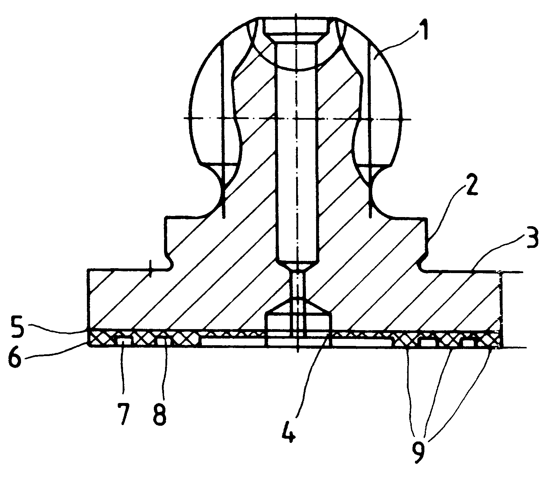

Die Figur zeigt einen Gleitschuh mit einem Kugelkopf 1, einem zylindrischen Bereich 2, einem Fußbereich 3, einer mittig angeordneten Bohrung 4 sowie eine Fußfläche 5, auf der eine Lagermetallschicht 6 aufgebracht ist, wobei in dieser Kanäle 7,8 für die Schmiermittelzufuhr eingearbeitet sind. Die eigentliche Gleitfläche besteht, aufgrund der Schmiermittelkanäle 7,8, aus Teilbereichen der Fußfläche 5, nämlich aus Ringflächen 9. Auf diesen Ringflächen wird der gesamte Gleitschuh im Betrieb auf einer Gegenfläche kreis- oder ellipsenförmig bewegt.

Die Herstellung der Lagermetallschicht 6 erfolgt zunächst in einem Auftragsvorgang in gleichmäßiger Schichtdicke. Dieser Auftrag wird mit dem Hochgeschwindigkeits-Flammspritzen durchgeführt, wie es beispielsweise aus der US-PS 4 416 421 oder der DE-OS 38 43 436 bekannt ist, wobei pulverförmiges Messingspritzgut (Cu-Zn-Legierung!) mit einer Körnung von -15 bis 45 »m aufgebracht wird. Als Brenngas kommt Acetlyen zur Anwendung, wobei ein Acetylen-zu-Sauerstoff- Verhältnis von etwa 1:2, also ein geringfügig reduzierende Verbrennungsbedingungen ergebendes Verhältnis, eingestellt wird, wodurch einer Aufoxidation des Spritzmetalls entgegengewirkt wird. Der Flammspritzvorgang wird zudem so eingestellt, daß Spritzpartikelgeschwindigkeiten von 400 bis 500 m/sec vorhanden sind, wodurch besonders günstige Schichten entstehen. Diese Einstellung hängt wesentlich von den angewandten Trägergas- und Brenngasdrücken ab. Nach vollständigem Auftrag der Lagermetallschicht sind in einem nachgeordneten Arbeitsgang noch die Schmiermittelkanäle anzubringen.

Diese Lagermetallschicht besitzt sowohl eine ausreichende Haftung auf dem Untergrund als auch eine ausreichende Abriebfestigkeit sowie ein günstiges Gleitverhalten. Gängige Schichten im Dickenbereich unterhalb eines Millimeters können mit dem beschriebenen Verfahren in einer Zeitdauer von ca 15 bis 60 sec. aufgetragen werden, womit insbesondere zeitliche und damit einhergehend ökonomische Vorteile gegenüber vorbekannten Methoden erzielt werden.

## Patentansprüche

1. Verfahren zur Herstellung einer Gleitlageroberflächenschicht aus Lagermetall, z.B. aus einer Kupfer-Zinn-, Kupfer-Blei- oder Blei-Aluminiumlegierung, unmittelbar auf einem Lagerelement,
**dadurch gekennzeichnet,**
daß die Schicht mit autogenem Flammspritzen oder Hochgeschwindigkeitsflammspritzen aufgebracht wird, wobei beim Auftragen eine Spritzpartikelgeschwindigkeit von wenigstens 200 m/sec, vorzugsweise größer 350 m/sec, eingestellt wird.

2. Verfahren nach Anspruch 1, dadurch gekennzeichnet, daß pulverförmiges Spritzmaterial mit einer Körnung von -15 »m bis 45 »m verwendet wird.

3. Verfahren nach Anspruch 1 oder 2,dadurch gekennzeichnet, daß als Brenngas Acetylen zur Anwendung kommt.

## Claims

1. Process for production of a plain bearing surface coating of bearing metal, e.g. of a copper-tin, copper-lead or lead-aluminium alloy, directly on a bearing element, characterised in that the coating is applied with autogenous flame spraying or high-speed flame spraying, using a spraying particle speed of at least 200 m/sec, preferably more than 350 m/sec, during application.

2. Process according to claim 1, characterised in that powdered spraying material is used with a grit size of -15 »m to 45 »m.

3. Process according to claim 1 or 2, characterised in that acetylene is used as the fuel gas.

## Revendications

1. Procédé de réalisation d'une couche superficielle de palier de glissement en métal pour palier, par exemple en un alliage cuivre-zinc, cuivre-plomb ou plomb-aluminium, directement sur un élément de palier, caractérisé en ce que l'on applique la couche par projection autogène à la flamme ou par projection à la flamme à grande vitesse, la vitesse des particules projetées au cours de l'application étant réglée à au moins 200 mètres/seconde, de préférence à une valeur supérieure à 350 mètres/seconde.

2. Procédé selon la revendication 1, caractérisé en ce qu'on utilise du matériau projeté pulvérulent présentant une granulométrie de -15 »m à 45 »m.

3. Procédé selon la revendication 1 ou 2, caractérisé en ce qu'on utilise comme gaz combustible de l'acétylène.
